# EUROPEAN PATENT APPLICATION

(11) **EP 1 507 351 A2**
(43) Date of publication of application: **16.02.2005**
(21) Application number: 04016032.7
(22) Date of filing: 07.07.2004
(51) Int. Cl.: H04J 14/02, H01S 5/00

(54) **Bi-directional wavelength division multiplexing system**

(30) Priority: 12.08.2003 KR 2003055882
(71) Applicant: Samsung Electronics Co., Ltd., Suwon-si, Gyeonggi-do (KR)
(72) Inventor: Lee, Jeong-Seok, Yeongtong-gu Suwon-si Gyeonggi-do (KR); Shin, Dong-Jae, Yeongtong-gu Suwon-si Gyeonggi-do (KR); Hwang, Seong-Taek, Yeongtong-gu Suwon-si Gyeonggi-do (KR)
(74) Representative: Grünecker, Kinkeldey, Stockmair & Schwanhäusser Anwaltssozietät

(57) **Abstract**

A bi-directional WDM communication system of the type having central and local offices, and subscribers is provided. The central office includes downstream Bragg reflector lasers for generating downstream channels of different wavelengths, each channel being wavelength-locked to a corresponding incoherent light beam. The central office multiplexes the downstream channels into a downstream optical signal, demultiplexes an upstream optical signal into upstream channels of different wavelengths, and detects the upstream channels. The local office demultiplexes a downstream optical signal into downstream channels, multiplexes upstream channels of different wavelengths into an upstream optical signal, outputs it to the central office, and demultiplexes a broadband light beam into incoherent light beams of different wavelengths. Each subscriber receives the corresponding downstream channel and incoherent light beam, includes an upstream Bragg reflector laser for generating an upstream channel wavelength-locked to the received incoherent light beam, and outputs the upstream channel to the local office.

## Description

The present invention relates to an optical communication system, and more particularly to a Wavelength Division Multiplexing (WDM) passive optical communication system.

A WDM PON(Passive Optical Communication) mainly includes a center office, a plurality of subscribers, and a local office (or a remote node). The central office is configured to multiplex a plurality of downstream channels of different wavelengths into a downstream optical signal and outputs the multiplexed optical signal. The local office connects the central office with the subscribers.

The local office multiplexes the upstream channels received from the subscribers into an upstream optical signal and outputs the upstream optical signal to the central office. At the same time, the local office demultiplexes the downstream optical signal received from the central office into downstream channels of different wavelengths and outputs the downstream channels to corresponding subscribers.

The central office demultiplexes upstream optical signal received from the local office into a plurality of upstream channels and detects the upstream signals. It further generates a plurality of downstream channels of different preset wavelengths. The central office also multiplexes the downstream channels into a downstream optical signal and outputs the downstream optical signal to the local office.

A light source and a photodiode are used as an optical signal generator and an optical detector means at the subscriber end, respectively. An upstream channel to the local office is generated and a downstream channel received from the local office is detected by each subscriber, so that subscribers can perform a bi-directional communication with the central office.

A coherent light source, such as a DFB (Distributed Feedback) laser array, an MFL (Multi-Frequency Laser), a FP-LD(Fabry-Perot Laser Diode), an R-SOA (Reflective Semiconductor Optical Amplifier) or the like, or an incoherent light source such as an LED (Light Emitting Diode) is used as a light source for generating the upstream or downstream channel. A superluminescent diode, other than the LED, may also be used as the incoherent light source.

The Fabry-Perot laser may be used in conjunction with an incoherent light source. For example, after a light beam of a wide wavelength band outputted from a EDFA(Erbuim Doped Fiber Amplifier) or LED or the like is divided into a plurality of incoherent beams of different wavelengths, each of the incoherent beams is inputted to a corresponding FP-LD to induce a wavelength-locked state (also referred to as a mode-locked state or an injection-locked state), which allows the FP-LD to output a channel of the same wavelength as the inputted incoherent beam.

However, the optical transmitter including the FP-LD has a drawback in that the wavelength or gain of a channel outputted from it varies greatly depending on the temperature since lasing characteristics of the Fabry-Perot laser are highly dependent on temperature. As temperature varies, variations in the wavelength or gain of a channel outputted from the light source can cause the conventional WDM system to malfunction.

Therefore, the present invention has been made in view of the above problem and provides additional advantages. It is the object of the present invention to provide a bi-directional WDM passive communication system whose gain and wavelength are not affected by temperature changes.

This object is solved by the subject matter of the independent claims. Preferred embodiments are defined in the dependent claims.

According to one aspect of the present invention, a bi-directional WDM passive communication system includes: a central office including downstream Bragg reflector lasers for generating a plurality of downstream channels of different wavelengths, each downstream channel being wavelength-locked to a corresponding incoherent light beam. The central office multiplexes the downstream channels into a downstream optical signal, outputs the multiplexed downstream optical signal, demultiplexes an upstream optical signal into a plurality of upstream channels having different wavelengths, and detects the upstream channels. The WDM passive communication system further includes a local office for demultiplexing a downstream optical signal received from the central office into a plurality of downstream channels, outputting the demultiplexed downstream channels, multiplexing a plurality of upstream channels of different wavelengths inputted to the local office into an upstream optical signal, outputting the multiplexed upstream optical signal to the central office, demultiplexing a broadband light beam into a plurality of incoherent light beams of different wavelengths, and outputting the demultiplexed incoherent light beams; and a plurality of subscribers, each subscriber receiving a corresponding downstream channel and a corresponding incoherent light beam, each subscriber including an upstream Bragg reflector laser for generating an upstream channel wavelength-locked to the received incoherent light beam, each subscriber outputting the upstream channel to the local office.

The above features and other advantages of the present invention will be more clearly understood from the following detailed description taken in conjunction with the accompanying drawings, in which:
Fig. 1 shows the configuration of a WDM passive communication system having a Bragg reflector laser according to the present invention;
Fig. 2 shows the configuration of the Bragg reflector laser shown in Fig. 1;
Fig. 3 shows the configuration of a Bragg reflector laser as one embodiment that may be applied to the system shown in Fig. 1;
Fig. 4 shows the configuration of a Bragg reflector laser as another embodiment that may be applied to the system shown in Fig. 1;
Fig. 5 shows the configuration of a Bragg reflector laser as yet another embodiment that may be applied to the system shown in Fig. 1;
Fig. 6 is a graph showing changes in the wavelength and the gain of a conventional FP-LD due to changes in temperature as an illustrative comparison to the present invention; and
Fig. 7 is a graph showing changes in the wavelength and the gain of the Bragg reflector laser shown in Fig. 2 due to changes in temperature.

Now, embodiments of the present invention will be described in detail with reference to the annexed drawings. For the purposes of clarity and simplicity, a detailed description of known functions and configurations incorporated herein will be omitted as it may make the subject matter of the present invention unclear.

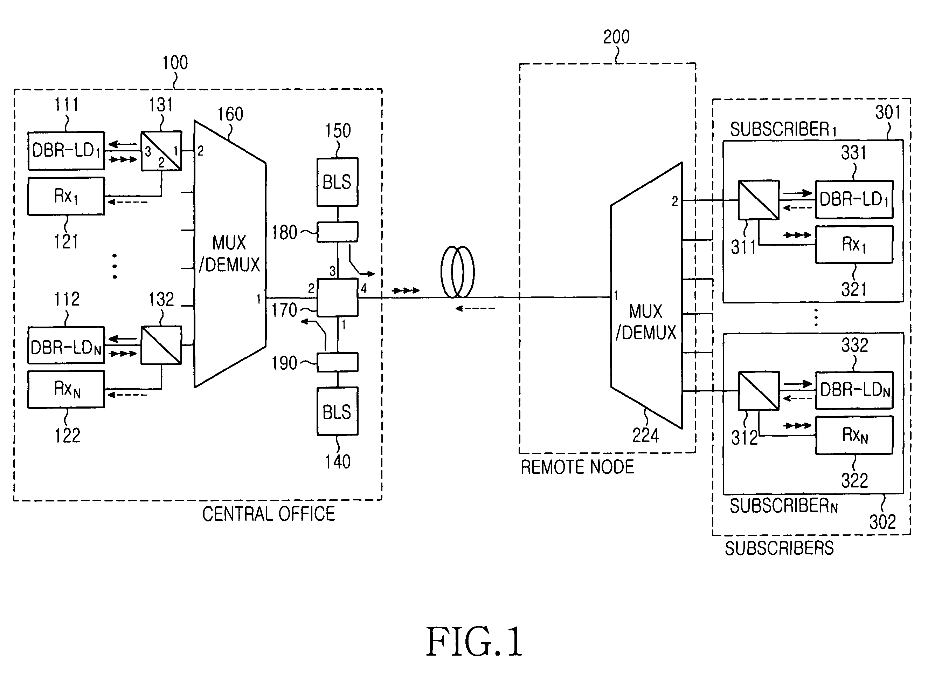

Fig. 1 shows the configuration of a WDM (Wavelength Division Multiplexing) passive communication system including a Bragg reflector laser according to the present invention. As shown, the WDM passive optical communication system according to the present invention includes a central office 130, a plurality of subscribers 301 and 302, and a local office 200. The central office 130 includes n (1st to nth) downstream Bragg reflector lasers 111 and 112. Note that the number of these Bragg reflector lasers is n, but they are denoted by only two references to avoid redundancy, and the same is true for other plural elements in the drawings. The plurality of n subscribers 301 and 302 include a plurality of upstream Bragg reflector lasers 331 and 332 for generating upstream channels, respectively. The local office 200 serves to connect the central office 130 to the subscribers 301 and 302.

The central office 130 includes n downstream Bragg reflector lasers 111 and 112, a downstream broadband light source 140, a multiplexer/demultiplexer 160, a circulator 170, an upstream broadband light source 150, n optical detectors 121 and 122, and n wavelength-selective couplers 131 and 132, and WDM filters 180, and 190.

The downstream broadband light source 140 outputs through the WDM filter 190 a light beam having a wide wavelength band (hereinafter referred to as a "broadband beam") to the circulator 170. An incoherent light source, such as an EDFA or an LED or a superluminescent diode, may be used as the downstream broadband light source 140.

The circulator 170 receives an upstream optical signals through its fourthly port connected to the local office 200, and outputs the received upstream optical signal through its primary port. The upstream optical signal is reflected back to a primary port by the WDM filter 190, and outputs it through a secondary port connected to the multiplexer/demultiplexer 160. At the same time, the circulator 170 receives downstream optical signals through the secondary port and outputs it through a tertiary port. The downstream optical signal is reflected back to the tertiary port by the WDM filter 180, and outputs it through the fourthly port connected to the remote node 200. The multiplexer/demultiplexer 160 demultiplexes the broadband beam from the light source 140 into a plurality of incoherent beams (λ₁ to λₙ) of different wavelengths (i.e., 1st to nth wavelengths), and demultiplexes the upstream optical signal into a plurality of upstream channels (λₙ₊₁ to λ₂ₙ) of different wavelengths. That is, the multiplexer/demultiplexer 160 receives the upstream optical signal and the broadband beam through a primary port of thereof connected to the secondary port of the circulator 170, and demultiplexes the upstream optical signal and the broadband beam, respectively, into n (1st to nth) upstream channels and n (1st to nth) incoherent beams. Then, the multiplexer/demultiplexer 160 outputs the n (1st to nth) upstream channels and n (1st to nth) incoherent beams to the n (1st to nth) wavelength-selective couplers 131 and 132 connected respectively to n (1st to nth) secondary ports of the multiplexer/demultiplexer 160, respectively.

Of the incoherent beams (λ₁ ∼ λₙ) demultiplexed in the multiplexer/demultiplexer 160, an incoherent beam of a wavelength λ₁ is referred to as a 1 st incoherent beam, and an incoherent beam of a wavelength λₙ is referred to as an nth incoherent beam. At the same time, of the upstream channels (λₙ₊₁ ∼ X₂ₙ) demultiplexed in the multiplexer/demultiplexer 160, an upstream channel of a wavelength λₙ₊₁ is referred to as a 1st upstream channel, and an upstream channel of a wavelength λ₂ₙ is referred to as an nth upstream channel. The incoherent beams (λ₁ ∼ λₙ) for wavelength-locking (or mode-locking) the downstream Bragg reflector lasers 111 and 112 and the upstream channels (λₙ₊₁ ∼ λ₂ₙ) use different wavelength bands.

Each of the 1st to nth downstream Bragg reflector lasers 111 and 112 generates a downstream channel whose wavelength is locked to the wavelength of a corresponding one of the 1st to nth incoherent beams. For example, the 1 st downstream Bragg reflector laser 111 generates a downstream channel whose wavelength is locked to the wavelength λ₁ of the 1st incoherent beam, and the nth downstream Bragg reflector laser 112 generates a downstream channel whose wavelength is locked to the wavelength λₙ of the nth incoherent beam.

Each of the 1st to nth optical detectors 121 and 122 detects a corresponding one of the 1 st to nth upstream channels. For example, the 1st optical detector 121 detects the 1st upstream channel of the wavelength λₙ₊₁, and the nth optical detector 122 detects the nth upstream channel of the wavelength λ₂ₙ. Photodiodes or the like may be used as the optical detectors 121 and 122.

The 1 st to nth wavelength-selective couplers 131 and 132 are connected to the 1 st to nth secondary ports of the multiplexer/demultiplexer 160, the 1st to nth downstream Bragg reflector lasers 111 and 112, and the 1st to nth optical detectors 121 and 122, respectively. For example, the 1st wavelength-selective coupler 131 is connected to the 1st secondary port of the multiplexer/demultiplexer 160, the 1st downstream Bragg reflector laser 111, and the 1st optical detector 121. The 1st wavelength-selective coupler 131 receives the 1st incoherent beam (λ₁) and the 1st upstream channel (λₙ₊₁) through a primary port thereof connected to the 1st secondary port of the multiplexer/demultiplexer 160, and outputs the 1st incoherent beam (λ₁) through a tertiary port thereof connected to the 1st downstream Bragg reflector laser 111 and a secondary port thereof connected to the 1 st optical detector 121, respectively. At the same time, the 1st wavelength-selective coupler 131 receives a 1st downstream channel (λ₁) generated by the 1st downstream Bragg reflector laser 111 through the tertiary port, and outputs it to the multiplexer/demultiplexer 160 through the primary port.

The WDM filter 190 is disposed between the downstream broadband light source 140 and the primary port of the circulator 170, whereby the upstream optical signal outputted from the primary port of the circulator 170 is reflected backward to the primary port of the circulator 170, and the broadband beam received from the downstream broadband light source 140 is outputted to the primary port of the circulator 170.

That is, the WDM filter 190 reflects the upstream optical signals and also transmits the received broadband beam, so that the upstream optical signals and the broadband beam are inputted to the circulator 170 through the primary port thereof. The circulator 170 outputs the upstream optical signals and the broadband beam inputted through the primary port to the multiplexer/demultiplexer 160 through the secondary port.

The WDM filter 180 is disposed between the upstream broadband light source 150 and the tertiary port of the circulator 170, whereby the downstream optical signal outputted from the secondary port of the circulator 170 is reflected backward to the tertiary port of the circulator 170, and the broadband beam received from the upstream broadband light source 150 is outputted to the tertiary port of the circulator 170.

That is, the WDM filter 180 reflects the downstream optical signal and also transmits the received broadband beam so that the downstream optical signal and the broadband beam are inputted to the circulator 170 through the tertiary port thereof. The circulator 170 outputs the downstream optical signal and the broadband beam inputted through the tertiary port to the multiplexer/demultiplexer 220 through the fourthly port.

The local office 200 includes a multiplexer/demultiplexer 220. The local office 200 is located between the central office 130 and the n subscribers 301 and 302 to connect the central office 130 with the n subscribers 301 and 302. The local office 220 multiplexes n upstream channels (λₙ₊₁ ∼ λ₂ₙ) generated respectively from the n subscribers 301 and 302 into an upstream optical signal, and outputs the upstream optical signal to the central office 130. At the same time, the local office 220 demultiplexes a downstream optical signal received from the central office 130 into n (1st to nth) downstream channels (λ₁ ∼ λₙ), and outputs the n (1st to nth) downstream channels to the n (1st to nth) subscribers 301 and 302, respectively.

The upstream broadband light source 150 inputs a broadband beam to allow the subscribers 301 to generate wavelength-locked upstream channels (λₙ₊₁ ∼ λ₂ₙ). The multiplexer/demultiplexer 220 multiplexes the n upstream channels (λₙ₊₁ ∼ λ₂ₙ) into an upstream optical signal and outputs the upstream optical signal and demultiplexes the downstream optical signal into n downstream channels (λ₁ ∼ λₙ) of different wavelengths. Of the demultiplexed downstream channels (λ₁ ∼ λₙ), a downstream channel of a wavelength λ₁ is hereinafter referred to as a 1st downstream channel, and a downstream channel of a wavelength λₙ is hereinafter referred to as an nth downstream channel.

The n subscribers 301 and 302 are connected respectively to the n secondary ports of the multiplexer/demultiplexer 220in the local office 200. The n subscribers 301 and 302 include n upstream Bragg reflector lasers 331 and 332, n optical detectors 321 and 322, and n wavelength-selective couplers 311 and 312, respectively.

Of the n subscribers 301 and 302, the 1st subscriber 301 detects the 1st downstream channel, and outputs the 1 st upstream channel of a wavelength λₙ₊₁. The nth subscriber 302 detects the nth downstream channel, and outputs the nth upstream channel of a wavelength λ₂ₙ. In other words, the 1st upstream channel is outputted from the 1st subscriber 301 and the nth upstream channel is outputted from the nth subscriber 302. The 1st subscriber 301 includes an optical detector 321 for detecting the 1st downstream channel, an upstream Bragg reflector laser 331 for generating the 1st upstream channel, and a wavelength-selective coupler 311 for outputting the 1st upstream channel to the local office 200 and outputting the 1st downstream channel to the 1st optical detector 321.

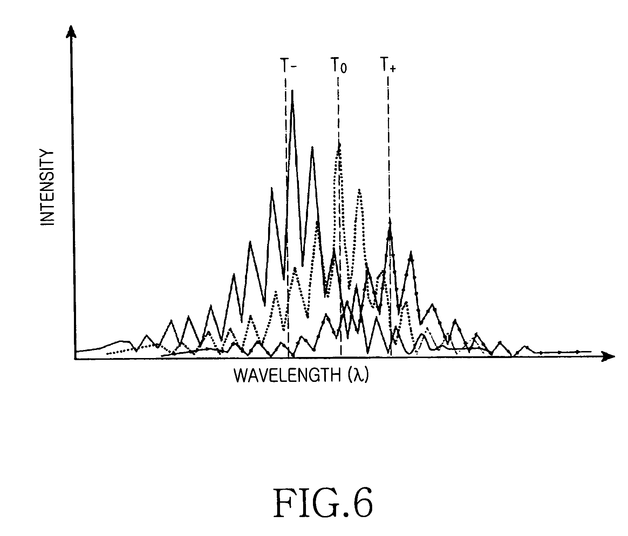

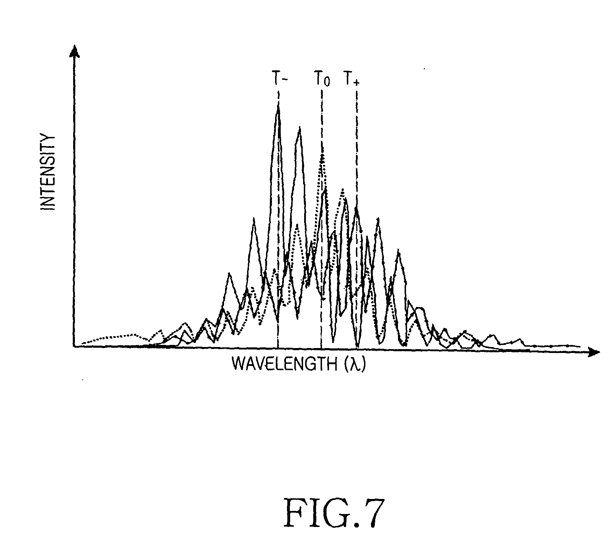

Fig. 6 is a graph showing changes in the wavelength and the gain of a conventional FP-LD as temperature varies, and Fig. 7 is a graph showing changes in the wavelength and the gain of a Bragg reflector laser according to the present invention as temperature varies (i.e., as temperature increases to T+ or decreases to T- from appropriate temperature T0). In these graphs, x and y-axes represent the wavelength and intensity of light outputted from the light source, respectively. That is, the two graphs show the wavelength with respect to the intensity at an appropriate temperature T0, a higher temperature T+ and a lower temperature T-. From the comparison of the two graphs, it can be seen that the center wavelength shift as temperature varies and the corresponding gain (or intensity) difference in Fig. 6 are higher than those in Fig. 7. Since the present invention uses the Bragg reflector laser as a light source for generating a wavelength-locked channel whose wavelength is locked to the wavelength of an incoherent beam, the WDM passive optical communication system according to the present invention has an advantage in that the dependency of the center wavelength and the gain of each channel on temperature is reduced.

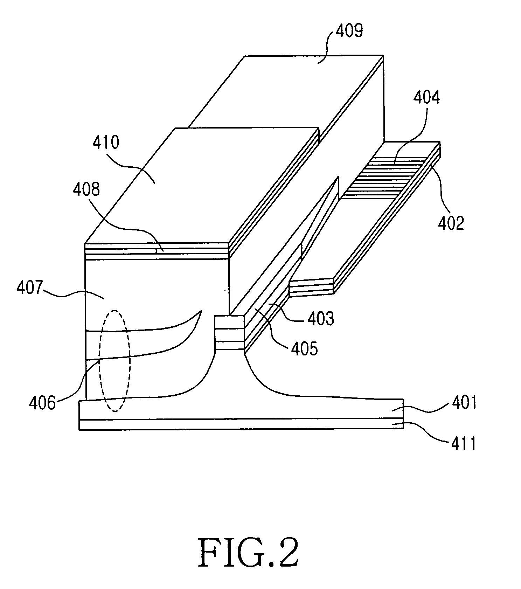

Fig. 2 is a perspective view showing the configuration of the Bragg reflector laser shown in Fig. 1. As shown, the Bragg reflector laser includes an n-InP substrate 401, an InGaAsP passive waveguide layer 402, an InP spacer 403, a Bragg grating 404, an active layer 405, a current blocking layer 406, a p-InP clad layer 407, a p-InGaAsP layer 408 for reducing ohmic contact resistance, an oxide layer 409, an upper electrode 410, and a lower electrode 411.

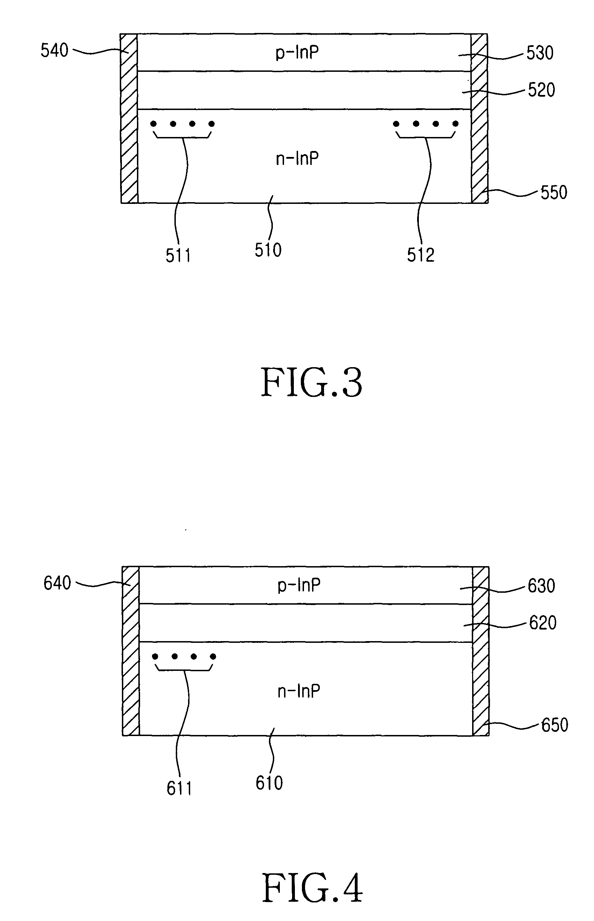

Fig. 3 is a side sectional view showing the configuration of a Bragg reflector laser shown in Fig. 2, in which a pair of Bragg gratings 511 and 512 are formed at opposite ends of the laser. As shown, the Bragg reflector laser includes an n-InP substrate 510, a pair of Bragg gratings 511 and 512 formed on the substrate 510 at both sides thereof, an active layer 520 deposited on the n-InP substrate 510, and a p-InP clad layer 530 deposited on the active layer 520. An anti-reflective layer 540 is deposited at one end of the Bragg grating laser and a highly-reflective layer 550 is deposited at the other end thereof

An incoherent beam of a predetermined wavelength is inputted to the Bragg reflector laser through the anti-reflective layer 540. After the inputted beam resonates between the Bragg gratings 511 and 512 a number of times, it is outputted as a wavelength-locked channel having a predetermined intensity from the Bragg reflector laser through the anti-reflective layer 540.

Fig. 4 is a side sectional view showing the configuration of a Bragg reflector laser shown in Fig. 2 according to another embodiment of the present invention, As shown, a Bragg grating 611 is formed at one side of the laser, and highly-reflective layer 650 is formed in the laser at the other side thereof The Bragg reflector laser further includes an n-InP substrate 610, a Bragg grating 611 formed on the substrate 610, an active layer 620 deposited on the n-InP substrate 610, and a p-InP clad layer 630 deposited on the active layer 620. An anti-reflective layer 640 is deposited on one end of the Bragg grating laser, and a highly-reflective layer 650 is deposited on the other end thereof. The Bragg grating 611 is formed on the n-InP substrate 610 near the anti-reflective layer 640.

An incoherent beam having a predetermined wavelength is inputted to the Bragg reflector laser through the anti-reflective layer 640. After the inputted beam resonates between the Bragg grating 611 and the highly-reflective layer 650 a number of times, it is outputted as a wavelength-locked channel having a predetermined intensity from the Bragg reflector laser through the anti-reflective layer 640.

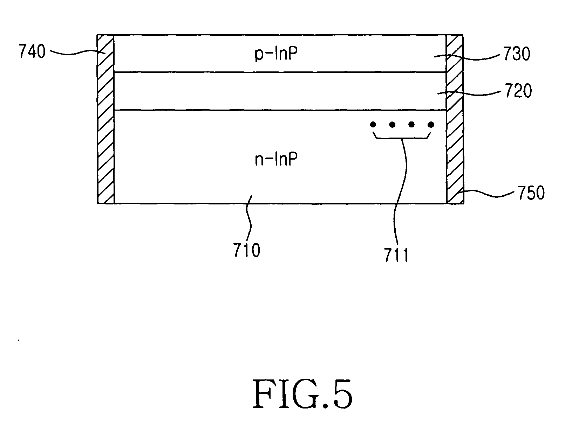

Fig. 5 is a side sectional view showing the configuration of a Bragg reflector laser according to still another embodiment that can be applied to the system shown in Fig. 1. As shown, the Bragg reflector laser includes an n-InP substrate 710, a Bragg grating 711 formed on the substrate 710, an active layer 720 deposited on the n-InP substrate 710, and a p-InP clad layer 730 deposited on the active layer 720. An anti-reflective layer 740 is deposited on one end of the Bragg grating laser, and a highly-reflective layer 750 is deposited on the other end thereof. The Bragg grating 711 is formed on the n-InP substrate 710 near the highly-reflective layer 730.

An incoherent beam of a predetermined wavelength is inputted to the Bragg reflector laser through the anti-reflective layer 740. After the inputted beam is reflected by the Bragg grating 711, it is outputted as a wavelength-locked channel having a predetermined intensity from the Bragg reflector laser through the anti-reflective layer 740.

As apparent from the above description, since a Bragg reflector laser as a light source is used for outputting upstream and downstream channels, a bi-directional WDM passive optical communication system according to the present invention has an advantage in that it prevents changes in the wavelengths and the gains of the outputted channels due to changes in the peripheral temperature. As the wavelengths and the gains of the outputted channels due to the peripheral temperature changes can be prevented, the present invention also has an advantage in that it is capable of preventing a malfunction of the bi-directional WDM optical communication system due to signal disturbance.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A bi-directional wavelength division multiplexing communication system comprising:
a central office having at least one downstream Bragg reflector laser for generating a plurality of downstream channels wavelength-locked to a plurality of first incoherent light beams, and means for multiplexing the downstream channels into a downstream optical signal and demultiplexing an upstream optical signal received therein into a plurality of first upstream channels of different wavelengths;
a local office having means for multiplexing a plurality of second upstream channels received therein into an upstream optical signal and for demultiplexing a broadband light beam into a plurality of second incoherent light beams of different wavelengths; and
a plurality of subscriber devices including at least one upstream Bragg reflector laser for generating a plurality of second upstream channels wavelength-locked to the corresponding plurality of second incoherent light beams received from the local office.

2. The system according to claim 1, wherein the central office further comprising a plurality of detectors for detecting the plurality of first upstream channels.

3. The system according to claim 1 or 2, wherein the plurality of subscriber devices further comprising a plurality of detectors for detecting the corresponding plurality of second upstream channels.

4. The system according to one of claims 1 to 3, wherein the central office further includes a downstream broadband light source for outputting a broadband light beam for a subsequent conversion to the plurality of first incoherent light beams; and
a wavelength division multiplexing filter disposed between the downstream broadband light source and the multiplexing/demultiplexing means for reflecting the upstream optical signal back to the multiplexing/demultplexing means.

5. The system according to one of claims 1 to 3, wherein the central office further includes an upstream broadband light source for outputting a broadband light beam for a subsequent conversion to the plurality of first incoherent light beams and a wavelength division multiplexing filter disposed between the upstream broadband light source and the multiplexing/demultiplexing means for reflecting the downstream optical signal back to the multiplexing/demultiplexing means.

6. The system according to one of claims 1 to 5, wherein each of the upstream and downstream Bragg reflector lasers include:
a semiconductor optical amplifier having an active layer deposited on a semiconductor substrate and a clad layer deposited on the active layer; and
a pair of Bragg gratings formed respectively on the semiconductor substrate at both ends thereof so as to have a center wavelength substantially equal to a corresponding one of the incoherent light beams.

7. The system according to claim 6, wherein each of the upstream and downstream Bragg reflector lasers further include:
an anti-reflective coating layer deposited at one end of the laser; and
a highly-reflective layer deposited at the other end thereof.

8. The system according to one of claims 1 to 5, wherein each of the upstream and downstream Bragg reflector lasers include:
a semiconductor optical amplifier having an active layer deposited on a semiconductor substrate and a clad layer deposited on the active layer; and
a Bragg grating formed on the semiconductor substrate at one end thereof so as to have a center wavelength substantially equal to a corresponding one of the incoherent light beams.

9. The system according to claim 8, wherein each of the upstream and downstream Bragg reflector lasers further include:
an anti-reflective coating layer deposited at one end of the laser; and
a highly-reflective layer deposited on the other end thereof.

10. An optical communication system comprising a central office, a local office, and a plurality of subscriber devices for supporting upstream and downstream signal propagation therebetween, the central office and each of the plurality of subscriber devices including a Bragg reflector laser for generating a plurality of channels wavelength-locked to a corresponding plurality of incoherent light beams received therein, and the central office and the local office including means for multiplexing and demultiplexing signals received therein.

11. The system according to claim 10, wherein the central office and each of the plurality of subscriber devices further comprising a detector for detecting the multiplexed signals.

12. The system according to claim 10 or 11, wherein the Bragg reflector laser includes:
a semiconductor optical amplifier having an active layer deposited on a semiconductor substrate and a clad layer deposited on the active layer; and
a pair of Bragg gratings formed respectively on the semiconductor substrate at both ends thereof so as to have a center wavelength substantially equal to a corresponding one of the incoherent light beams.

13. The system according to claim 12, wherein the Bragg reflector laser further includes:
an anti-reflective coating layer deposited at one end of the laser; and
a highly-reflective layer deposited at the other end thereof.

14. The system according to claim 10 or 11, wherein the Bragg reflector laser includes:
a semiconductor optical amplifier having an active layer deposited on a semiconductor substrate and a clad layer deposited on the active layer; and
a Bragg grating formed on the semiconductor substrate at one end thereof so as to have a center wavelength substantially equal to a corresponding one of the incoherent light beams.

15. The system according to claim 14, wherein the Bragg reflector laser further includes:
an anti-reflective coating layer deposited at one end of the laser; and
a highly-reflective layer deposited on the other end thereof.

16. A semiconductor laser comprising:
a semiconductor optical amplifier having an active layer deposited on a semiconductor substrate and a clad layer deposited on the active layer;
a pair of Bragg gratings formed respectively on the semiconductor substrate at both ends thereof so as to have a center wavelength substantially equal to an incoming incoherent light beam;
an anti-reflective coating layer deposited at one end thereof; and
a highly-reflective layer deposited at the other end thereof.

17. A semiconductor laser comprising:
a semiconductor optical amplifier having an active layer deposited on a semiconductor substrate and a clad layer deposited on the active layer;
a Bragg grating formed on the semiconductor substrate at one end thereof so as to have a center wavelength substantially equal to an incoming incoherent light beam;
an anti-reflective coating layer deposited at one end thereof; and
a highly-reflective layer deposited on the other end thereof.
